# EUROPÄISCHE PATENTANMELDUNG

(11) **EP 1 897 995 A1**
(43) Veröffentlichungstag der Anmeldung: **12.03.2008**
(21) Anmeldenummer: 07015428.1
(22) Anmeldetag: 07.08.2007
(51) Int. Cl.: E01C 11/22, A01G 1/08

(54) **Bausatz zur Begrenzung von Beeten, Grünflächen, Wegen oder sonstigen Flächen mittels Begrenzungssteinen**

(30) Priorität: 28.08.2006 DE 102006040692
(71) Anmelder: Armin, Wigand, 66879 Steinwenden (DE)
(72) Erfinder: Armin, Wigand, 66879 Steinwenden (DE)
(74) Vertreter: Klein, Friedrich

(57) **Zusammenfassung**

Die Erfindung betrifft einen Bausatz zur Begrenzung von Beeten, Grünflächen, Wegen oder sonstigen Flächen mittels Begrenzungssteinen, aufweisend mindestens zwei aneinander zu reihende und an ihrer jeweiligen Stirnseite miteinander zu verbindende Begrenzungssteine 1 und mindestens ein Befestigungsmittel 2 für diese, wobei die Begrenzungssteine 1 an ihren Stirnseiten 7 jeweils eine im wesentlichen parallel zu ihrer Längsrichtung verlaufende und sich nur über einen Teilbereich der Höhe der Begrenzungssteine erstreckende Nut 8 zur Aufnahme von Stegen 3,4 des Befestigungsmittels 2 aufweisen, und am Befestigungsmittel 2 zwischen den Stegen 3,4 mindestens ein sich quer zu diesen erstreckkendes Verankerungsteil 5 angeordnet ist (Fig. 1).

## Beschreibung

Die Erfindung betrifft einen Bausatz zur Begrenzung von Beeten, Grünflächen, Wegen oder sonstigen Flächen mittels Begrenzungssteinen nach dem Oberbegriff des Anspruches 1.

Zur Begrenzung von Beeten, Wegen, Rasen- oder sonstigen Flächen sind aufeinander folgend zu verlegende Begrenzungssteine bekannt, die an ihren stirnseitigen Enden nach dem "Nut/Feder-Prinzip" miteinander verbindbar sind.
Soweit es sich hierbei um aus Beton hergestellte Begrenzungssteine handelt, ist an der einen Stirnseite eine meist halbzylindrische Aufnahme und an der anderen Stirnseite ein dementsprechender Vorsprung vorgesehen, sodaß aufeinander folgende Begrenzungssteine an ihren Stirnseiten ineinander greifen. Derartige Begrenzungssteine werden meist in einem Betonbett verlegt, was relativ zeitaufwendig und auch materialintensiv ist.

Zur Vermeidung des Betonbettes ist in der EP 1 275 782 A2 ein Begrenzungsstein vorgeschlagen, der mit einem an seiner Rückseite vorgesehenen keilförmigen Einschlagelement einstückig ausgebildet ist und an seiner Unterseite eine ebenfalls keilförmige Schrägfläche aufweist. Dieser Begrenzungsstein kann durch das Aufbringen einer Kraft in den Untergrund getrieben und/oder eingeschlagen werden. In einer besonderen Ausführungsform kann diese Schrägfläche zur Erhöhung der Standfestigkeit des Begrenzungssteines widerhakenförmig ausgebildet sein. Mit dieser Lösung wird zwar das Verlegen der Begrenzungssteine vereinfacht und erleichtert, jedoch ist einerseits die Herstellung solcher Begrenzungssteine wesentlich aufwendiger und andererseits erfordern diese sowohl bei ihrer Lagerung als auch beim Transport einen wesentlich größeren Platz.

Eine der vorbeschriebenen Lösung funktionell ähnliche Lösung ist in der DE 85 17 980 U geoffenbart. Diese zeigt ein im wesentlichen T-förmig ausgebildetes Begrenzungselement, mit einem in der Einbaulage im wesentlichen horizontal gerichteten und in der Ebene des Beetes liegenden Steg, der mittels Bodennägeln im Erdreich befestigt wird. Das eine Ende des in der Einbaulage senkrecht gerichteten Querteils des "T" dient zur zusätzlichen Verankerung und ist hierzu keilförmig ausgebildet, während das andere Ende zur Aufnahme von Verbindungsteilen für die Aneinanderreihung aufeinanderfolgender Begrenzungselemente dienen kann.
Da diese vorzugsweise aus Kunststoff bestehenden Begrenzungselemente selbst als Einfriedung dienen, sind gesonderte Begrenzungssteine nicht erforderlich.

Zur Bildung von in sich geschlossenen Beeteinfassungen ist in der DE 20 2004 005 903 U1 ein Verbindungselement mit zwei winklig zueinander angeordneten doppelwandigen Seitenteilen gezeigt, wobei der lichte Abstand der Wandungen eines jeden Seitenteils etwas größer als die Breite der zwischen die Wandungen einzuschiebenden Begrenzungselemente ist, die aus Stein, Holz oder ähnlich festen Materialien bestehen. Die beiden Seitenteile sind dabei an einem im Scheitel des von ihnen eingeschlossenen Winkels angeordneten Rohr befestigt, dessen unteres Ende angeschrägt und im Erdreich befestigbar ist. Um ein Durchrutschen der Begrenzungselemente zwischen den Seitenteilen zu verhindern, können an der Unterseite der doppelwandigen Seitenteile Stege vorgesehen sein.

Eine Lösung für L-förmig ausgebildete Begrenzungssteine, ist in der DE-296 11 738 gezeigt. Hier werden die L-förmigen Formsteine auf ein Fundament aufgesetzt und weisen an ihren beiden Stirnseiten je eine sich über ihre gesamte Höhe erstreckende, einseitig offene Nut auf, in die zur Verbindung zweier aufeinander folgender Formsteine eine besonders gestaltete und sich über die gesamte Höhe der Formsteine erstreckende "Verbindungsfeder" eingeführt wird. Die Verbindungsfeder ist an mindestens einer ihrer Seitenflächen mit sich über ihre gesamte Höhe erstreckenden Längsrillen versehen. Die Nuten weisen im Bereich ihres jeweils geschlossenen Endes entsprechende innenliegende Ausbuchtungen auf, in die -nachdem die zwei aufeinander folgende Formsteine verbindende Verbindungsfeder in die beiden Nuten eingeführt ist- sogenannte Festsetzungsbolzen eingetrieben werden, wodurch die Verbindungsfeder in der Haupterstreckungsrichtung der Steine gesichert wird. Da bei dieser Lösung das für die Verbindung von jeweils aufeinander folgenden Formsteinen wichtigste Teil, nämlich die Verbindungsfeder eine bestimmte Elastizität aufweisen muß und daher aus Recycling-Kautschuk, Gummi oder Kunststoff besteht, sind zusätzliche lagestabilisierende Verschienungen für die Formsteine erforderlich, sodaß diese Lösung einerseits relativ aufwendig und andererseits aufgrund der geforderten Elastizität der Verbindungsfeder nicht überall einsetzbar ist.
Diese Lösung hat zwar den Vorteil, daß sich die Relativlage der Formsteine sehr stark variieren läßt, jedoch ist sie auch insofern aufwendig, als die Verbindungsfeder hierzu eine bestimmte Elastizität aufweisen muß, und daher zusätzlich zur Verbindungsfeder noch die lagestabilisierende Verschienung erforderlich ist.

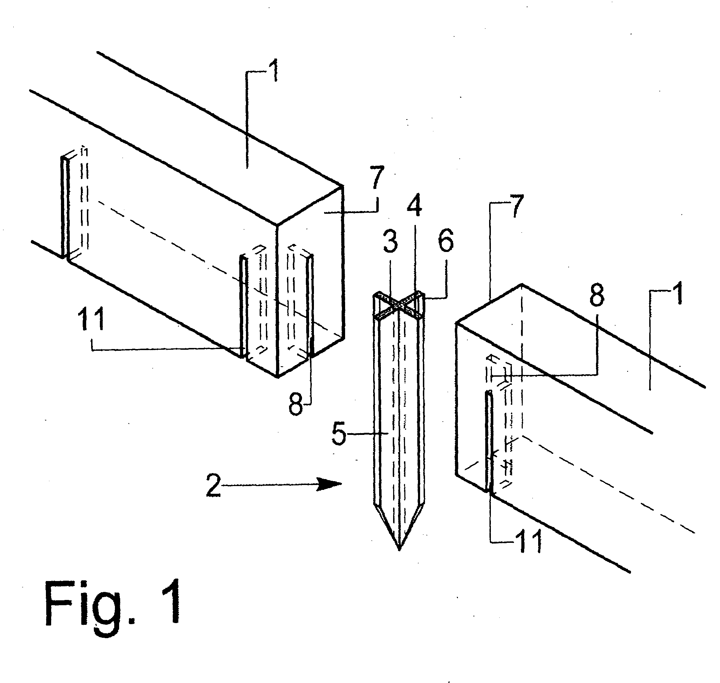

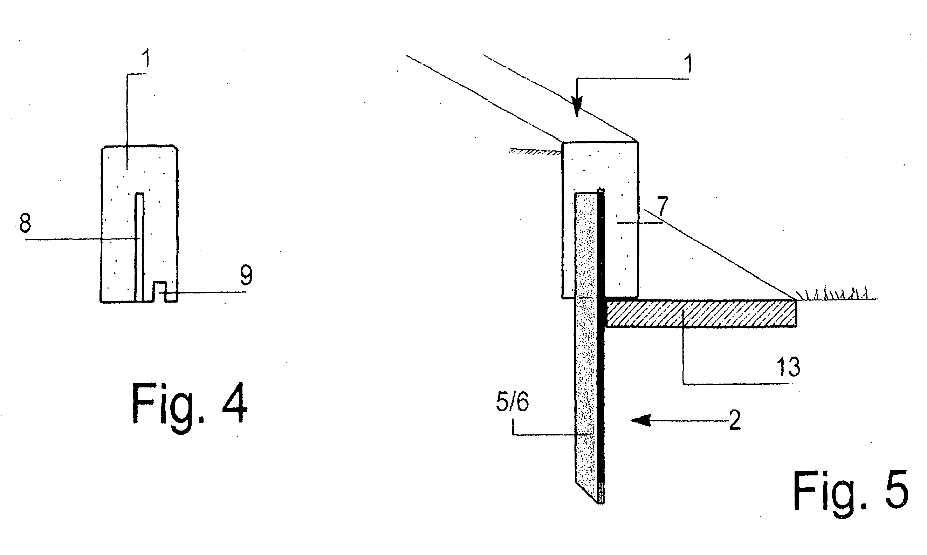

Schließlich ist in der DE-203 06 664 U eine Einrichtung zum Erstellen gerader oder beliebig geschwungener unverrottbarer Einfriedungen von Beeten, Rasenflächen usw gezeigt, bei der eine Mehrzahl relativ schmaler, an ihrer Rückseite mittels eines Flexverbinders miteinander verbundenen Grundelementen zu einer Einheit zusammengefaßt ist, deren jeweilige äußere Segmente mit Nuten versehen sind, in die zur besseren Montage, exakten und dauerhaften Fluchteinhaltung, sowie zur höheren Stabilität Schlagbinder eingeschoben und im Erdreich des Grabenbodens verankert werden.
Wie aus der DE-203 06 664 U hervorgeht, ist diese Lösung für aus nicht verrottbarem Material, wie Kunststoff -vorzugsweise Kunststoffrecyclinggebildeten Grundelementen aufgebaut, die -wie auch die Fig. 1 und 4 zeigen- nicht auf dem Erdreich aufsitzen, sondern dieses offensichtlich an die Grundelemente angeböscht wird.

Der Erfindung liegt die Aufgabe zu Grunde, einen Bausatz zur Begrenzung von Beeten, Wegen oder sonstigen Flächen mittels Begrenzungssteinen zu schaffen, der einerseits ein leichtes und schnelles Verlegen und Verbinden der Begrenzungssteine ermöglicht, und andererseits eine ausreichende Standfestigkeit derselben gewährleistet. Dabei soll gleichzeitig sicher gestellt sein, daß die Verlegelage der Begrenzungssteine nachträglich leicht veränderbar ist und auch an verlegte Begrenzungssteine weitere Begrenzungssteine angeschlossen werden können.

Diese Aufgabe wird durch einen Bausatz gelöst, dessen Begrenzungssteine an ihren einander gegenüber liegenden Stirnseiten jeweils eine im wesentlichen parallel zu ihrer Längsrichtung verlaufende Nut zur Aufnahme von Stegen des Befestigungsmittels aufweisen, und am Befestigungsmittel zwischen den Stegen mindestens ein sich quer zu diesen erstreckendes Verankerungsteil angeordnet ist.

Hierdurch können die Begrenzungssteine unmittelbar auf eine eingeebnete Bodenfläche aufgestellt und nacheinander mittels des in den Boden einzutreibenden Verankerungsteiles befestigt werden, wobei am Anfang der zu bildenden Aufeinanderfolge der Befestigungsmittel zunächst ein Befestigungsmittel mit nur einem Steg mittels des Verankerungsteils im Boden befestigt wird, wonach , dann der Abstand bis zum nächsten Verankerungsteil gemessen und dieses dann ebenfalls in den Boden getrieben wird. Nun kann der erste Begrenzungsstein von oben zwischen die beiden Verankerungsteile geführt werden, wobei einerseits die Stege in Eingriff mit den Nuten kommen und andererseits die Stirnflächen des Begrenzungssteins am Verankerungsteil zur Anlage kommen. Da einerseits die Breite der Nuten der Breite der Stege entspricht und andererseits der Begrenzungsstein mit seiner Grundfläche auf dem Boden aufliegt, ist die. Lage des ersten Begrenzungssteines und -in analoger Weise hierzudie Lage der nachfolgenden Begrenzungssteine gesichert. Da zudem die Stirnseiten der Begrenzungssteine unmittelbar an den Seitenflächen des Verankerungsteils anliegen, ergibt sich zwischen den Begrenzungssteinen eine Fuge, deren Breite der Dicke der Verankerungsteile entspricht und daher nur einige wenige Millimeter mißt. Obwohl die Lage der Begrenzungssteine damit ausreichend gesichert ist, lassen sich verlegte Begrenzungssteine relativ leicht aus einem Verbund entfernen und durch andere ersetzen.

Sofern sich die Nuten jeweils nur über einen Teilbereich der Höhe der Begrenzungssteine erstrecken, bleibt die Oberseite der Begrenzungssteine geschlossen, sodaß weder die Nuten, noch die in sie einzuführenden Stege der Befestigungsmittel in Draufsicht auf die verlegten Begrenzungssteine sichtbar sind.

Für die Ausrichtung der Begrenzungssteine ist es ausreichend, wenn die Breite der Stege der Befestigungsmittel in einer Größenordnung von ca 15 bis 20 cm liegt. Daher genügt es, wenn sich die Nuten nur über einen entsprechenden Teilbereich der Länge der Begrenzungssteine erstrecken und ihre Länge im wesentlichen der Breite der Stege entspricht.

Zum Eintreiben des Verankerungsteils in das Erdreich ist es vorteilhaft, wenn das Befestigungsmittel einen im wesentlichen T-förmigen Querschnitt aufweist und das Verankerungsteil im Bereich seines freien Endes keilförmig ausgebildet ist. In einer weiteren Ausführungsform des Befestigungsmittels können an diesem auch zwei Verankerungsteile vorgesehen sein, sodaß das Befestigungsmittel die Form eines Kreuzes aufweist.

Um die Begrenzungssteine auch wahlweise im Winkel zueinander anordnen zu können, weisen diese im Bereich ihres die erste Nut aufweisenden Endes einer Seitenfläche eine der ersten Nut entsprechende zweite Nut auf, die zur ersten Nut quer gerichtet ist.

In manchen Fällen ist es vorteilhaft, beim Verlegen von Begrenzungssteinen am Rand der einzugrenzenden Fläche gleichzeitig eine Versorgungsleitung, beispielsweise eine Strom- oder eine Wasserleitung mit zu verlegen. Dies wird in einfacher Weise ohne wesentlichen Aufwand dann erreicht, wenn seitlich der ersten Nut ein sich im wesentlichen über die gesamte Länge des Begrenzungssteines erstreckender Kanal zur Aufnahme einer Versorgungsleitung vorgesehen ist.

Weitere Einzelheiten und Vorteile der Erfindung ergeben sich aus der nachfolgenden Beschreibung eines in der beigefügten Zeichnung dargestellten Ausführungsbeispiels der Erfindung.

Es zeigt:
- **Fig. 1:**: Eine schaubildliche Darstellung der Endbereiche zweier zu verlegender Begrenzungssteine mit einem Befestigungsmittel;
- **Fig. 2:**: Eine Schnitt-Darstellung der Endbereiche zweier Begrenzungssteine mit einem Verankerungsteil;
- **Fig. 3:**: Eine Darstellung verschiedener Variationsmöglichkeiten von verten Begrenzungssteinen;
- **Fig. 4:**: Eine Ansicht der Stirnseite eines Begrenzungssteines mit einem Kanal für eine Versorgungsleitung;
- **Fig. 5:**: Eine schaubildliche Darstellung des Endbereiches eines auf Platten verlegten Begrenzungssteines;

In Fig. 1 sind die Endbereiche zweier aneinander zu reihender Begrenzungssteine 1 gezeigt, die eine prismenförmige Form aufweisen und in ihrer Verlegelage mittels Befestigungsmitteln 2 miteinander verbunden werden. Dabei werden die Begrenzungssteine 1 gleichzeitig im Boden befestigt, der vom Rand der einzugrenzenden Fläche oder von aneinander gereihten Platten gebildet sein kann.
Die Befestigungsmittel 2 sind im wesentlichen von zwei parallel zueinander gerichteten Stegen 3,4 und zumindest einem mittig dazu angeordneten Verankerungsteil 5 gebildet, das quer zu den Stegen 3,4 gerichtet ist. Die Befestigungsmittel 2 weisen somit einen im wesentlichen T-förmigen Querschnitt auf. In einer weiteren Ausführungsform der Befestigungsmittel 2 kann jedoch zusätzlich zum Verankerungsteil 5 ein diesem auf der anderen Seite der Stege 3,4 gegenüberliegendes weiteres Verankerungsteil 6 vorgesehen sein, sodaß auf beiden Seiten der Stege 3,4 ein Verankerungsteil vorhanden ist, und die Befestigungsmittel 2 damit einen im wesentlichen kreuzförmigen Querschnitt aufweisen.
Die beiden Stege 3,4 und die Verankerungsteile 5,6 sind im Bereich ihrer unteren Enden zum leichteren Eintreiben des Befestigungsmittels 2 in den Boden keilförmig abgeschrägt.

Die Begrenzungssteine 1 sind an ihren Stirnseiten 7 mit je einer Nut versehen. Da beide Nuten die gleiche Ausbildung und auch die gleiche Lage an der jeweiligen Stirnseite aufweisen, werden beide Nuten jeweils als Nut 8 bezeichnet. Die Nuten 8 sind in einer bevorzugten Ausführungsform der Erfindung mittig zu den Begrenzungssteinen 1 angeordnet und verlaufen parallel zu deren Längsseiten. Sie erstrecken sich von der jeweiligen Stirnseite 7 in Richtung der jeweils anderen Stirnseite 7.
Die Breite der Nut entspricht im wesentlichen der Dicke der Stege 3,4 des Befestigungsmittels 2, während die Tiefe der Nuten 8 etwas größer als die Breite der Stege 3,4 der Verankerungsteile 5,6 ist, sodaß sich die Stege 3,4 leicht in die Nuten 8 einführen lassen, deren Höhe sich nur über einen Teilbereich der Höhe der Begrenzungssteine 1 erstreckt und deren Oberseite daher geschlossen bleibt.

In einer bevorzugten Ausführungsform der Erfindung weisen die Begrenzungssteine 1 seitlich der Nuten 8 einen sich parallel zur Längsseite der Begrenzungssteine 1 erstreckenden Kanal 9 zur Aufnahme einer Versorgungsleitung auf, die eine Wasser- oder eine Stromleitung sein kann.

In einer weiteren Ausführungsform der Erfindung können die Begrenzungssteine 1 an mindestens einer ihrer Längsseiten mit weiteren (zweiten) Nuten 11 versehen sein, deren Form der Form der Nuten 8 entspricht. Dabei ist es vorteilhaft, wenn der Mittenabstand der Nuten 11 zur jeweiligen Stirnseite 7 gleich dem Mittenabstand der Nuten 8 zur jeweiligen Längsseite des Begrenzungssteines 1 ist.
In einer zusätzlichen Ausführungsform der Erfindung kann auch in der Mitte der Längsseiten der Begrenzungssteine 1, eine zusätzliche (dritte) Nut 12, vorgesehen sein, deren Ausbildung der Form der Nuten 8 bzw 11 entspricht. Die Nut 12 ist dabei im wesentlichen parallel zur Nut 11 gerichtet.

Beim Verlegen der Begrenzungssteine wird zunächst ein Befestigungsmittel 2 mit nur einem Steg 4 im Boden durch Eintreiben eines oder zweier Verankerungsteile 5,6 befestigt. Anschließend wird im der Länge der Begrenzungssteine entsprechendem Abstand ein weiteres Befestigungsmittel 2 im Boden befestigt, wobei darauf zu achten ist, daß die Stege 3,4 des zweiten Befestigungsmittels 2 mit dem Steg 4 des ersten Befestigungsmittels 2 fluchten. Danach wird der erste Begrenzungsstein 1 von oben zwischen die beiden im Boden befestigten Befestigungsmittel 2 geführt, wobei sowohl der Steg 4 des ersten Befestigungsmittels 2 als auch der Steg 3 des zweiten Befestigungsmittels 2 in die jeweilige Nut 8 eingreift, und das Verankerungsteil 5 und -soweit vorhanden- auch das Verankerungsteil 6 an der Stirnseite 7 des Begrenzungssteins 1 zur Anlage kommen. Der erste Begrenzungsstein 1 ist damit sowohl durch die in die Nuten 8 eingreifenden Stege 3,4 als auch durch die an den Stirnseiten 7 des Begrenzungssteines 1 anliegenden Verankerungsteile 5,6 in seiner Lage gesichert.

Zum Anlegen eines nächstfolgenden Begrenzungssteines ist in einem dessen Länge entsprechenden Abstand zum letzten Begrenzüngsstein 1 ein weiteres Befestigungsmittel 2 im Boden zu befestigen, wobei ebenfalls darauf zu achten ist, daß dessen Stege 3,4 mit dem noch freien Steg des vorangehenden Befestigungsmittels fluchtet. Anschließend wird der nächst folgende Begrenzungsstein wiederum von oben zwischen die beiden Befestigungsmittel geführt, wobei der Steg 3 in die Nut 8 des schon verlegten Begrenzungssteines und der Steg 4 in die Nut 8 des zu verlegenden nächstfolgenden Begrenzungssteines eingreift und die Verankerungsteile 5 und 6 sich zwischen den beiden Begrenzungssteinen befinden und an deren Stirnseiten anliegen. Auf diese Weise ist es möglich, mit dem erfindungsgemäßen Bausatz geradlinige Strecken beliebiger Längen zu bilden.

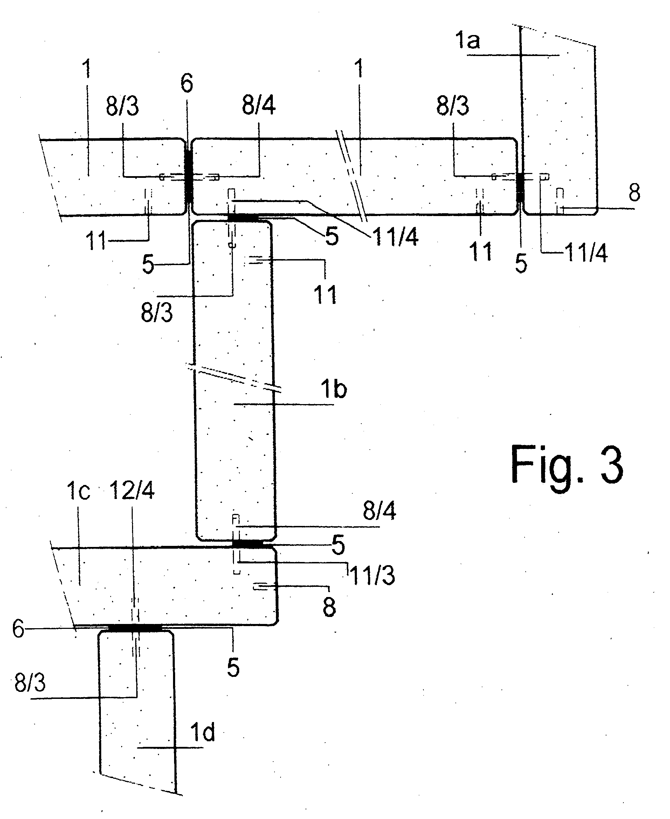

Mit dem erfindungsgemäßen Bausatz können nicht nur gerade sondern auch winklig verlaufende Flächen begrenzt werden, wozu sich durch die Nuten 11 und 12 vielfältige Möglichkeiten ergeben, wovon eine in Fig. 3 in Draufsicht dargestellt ist.
Hier ist an den rechten der beiden hintereinander liegend miteinander verbundenen Begrenzungssteine 1 sowohl ein (in der Zeichnung) nach aufwärts gerichteter Begrenzungsstein 1 a, als auch ein nach abwärts gerichteter Begrenzungsstein 1 b angeschlossen, der seinerseits mit einem parallel zu den Begrenzungssteinen 1 gerichteten Begrenzungsstein 1 c verbunden ist, an dessen Mitte noch ein Begrenzungsstein 1d anschließt.

Wie hierzu der Fig. 3 zu entnehmen ist, können alle Begrenzungssteine mit einem erfindungsgemäßen Befestigungsmittel 2 miteinander verbunden und am Boden befestigt werden, wobei es hinsichtlich der Verbindungsmöglichkeit der Begrenzungssteine gleichgültig ist, ob hierzu Befestigungsmittel mit nur einem Verankerungsteil 5 oder solche mit zwei Verankerungsteilen 5,6 verwendet werden.
Bei der Verbindung zwischen den Begrenzungssteinen 1 und 1a greift der Steg 3 eines Befestigungsmittels 2 in die Nut 8 des Begrenzungssteines 1, während dessen Steg 4 in die Nut 11 des Begrenzungssteines 1 a eingreift.

Demgegenüber greift bei der Verbindung zwischen dem Begrenzungssteinen 1 und 1 b der Steg 3 eines Befestigungsmittels 2 in die Nut 8 des Begrenzungssteines 1 b und dessen Steg 4, in die Nut 11 des Begrenzungssteines 1.
Zur Verbindung der beiden Begrenzungssteine 1 b und 1 c greift der Steg 3 des Befestigungsmittels 2 in die Nut 11 des Begrenzungssteines 1c, während dessen Steg 4 in die Nut 8 des Begrenzungssteines 1 b ragt. Schließlich ragt zur Verbindung der beiden Begrenzungssteine 1c und 1d der Steg 3 des Befestigungsmittels 2 in die Nut 8 des Begrenzungssteines 1 d, während dessen Steg 4 in die mittig zur Längsseite des Begrenzungssteines 1 c angeordnete Nut 12 des Begrenzungssteines 1c eingreift.

Vorstehende Verlegebeispiele zeigen, daß mit ein und derselben Ausbildung der Begrenzungssteine 1 und nur einer einzigen Ausführungsform des Befestigungsmittels eine große Variation der Anordnung der Begrenzungssteine 1 erreichbar ist, die selbstverständlich noch beliebig variiert werden kann.

Bei der gezeigten Verlegevarinate der Begrenzungssteine verlaufen deren Seitenflächen ausschließlich geradlinig, sodaß auch die gezeigte Verlegevariante nur geradlinige Begrenzungen aufweist.
Die erfindungsgemäße Lösung ist selbstverständlich auch bei bogen- oder kreisförmig zu verlegenden Begrenzungssteinen anwendbar. Hierzu ist es lediglich erforderlich, daß die Begrenzungssteine entsprechend geformt sind, und die Nuten jeweils rechtwinklig zu den jeweils aneinander angrenzenden Seitenflächen der Begrenzungssteine gerichtet sind.

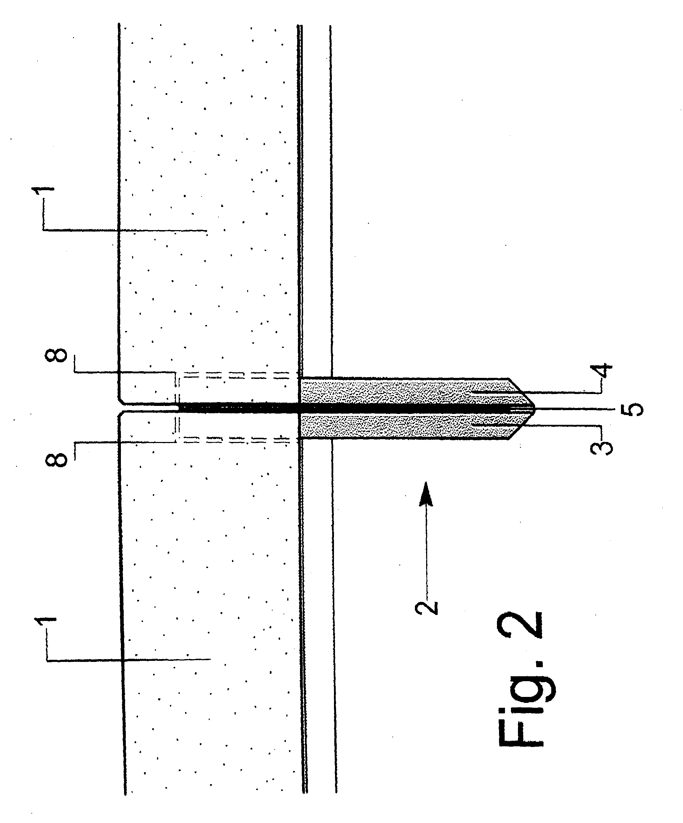

Bei der in den Fig. 1 bis 4 gezeigten Ausführungsform der Erfindung sind die Begrenzungssteine unmittelbar auf dem Rand der einzugrenzenden Fläche verlegt.
Insbesondere bei Rasenflächen ist es oft erwünscht, beim Verlegen der Begrenzungssteine gleichzeitig eine sog. Mähkante zu bilden, wobei die der zu begrenzenden Fläche zugewandte Längsseite des Begrenzungssteines weniger tief in das Erdreich ragt, als die der zu begrenzenden Fläche abgewandte Längsseite, wobei zwischen dem Begrenzungsstein und der zu begrenzenden Fläche ein von aufeinander folgenden Platten gebildeter Rand vorhanden ist.

Eine solche Anordnung einer Platte ist in Fig. 5 gezeigt. Hierbei grenzt der eine Randbereich der Platte 13 an die Rasenfläche, wobei der Begrenzungsstein entweder vollends auf dem anderen Randbereich der Platte 13 aufliegt, oder teilweise auf der Platte und teilweise auf dem benachbarten Erdbereich aufliegt.
Sofern die Stirnseiten des entsprechenden Begrenzungssteines 1 und der Platte 13 bündig enden, kann zur Befestigung des Begrenzungssteines 1 ein Befestigungsmittel 2 mit zwei Verankerungsteilen 5,6 verwendet werden, wovon dann eines zwischen die Stirnseiten der beiden aufeinander folgenden Platten 13 ragen kann, wodurch diese gleichzeitig gegen Verdrehen gesichert werden. Falls die Stirnseiten des entsprechenden Begrenzungssteines 1 und der Platte 13 nicht bündig enden, kann in die Seitenfläche der Platte 13 ein der Breite der Nuten 8,11 entsprechender Schlitz zur Aufnahme des jeweiligen Verankerungsteiles 5 bzw 6 eingearbeitet werden, wodurch die aufeinander folgenden Platten 13 sowohl gegen Verdrehen, als auch gegen Verschieben in Längsrichtung der Begrenzungssteine gesichert sind.

## Patentansprüche

1. Bausatz zur Begrenzung von Beeten, Grünflächen, Wegen oder sonstigen Flächen mittels Begrenzungssteinen, aufweisend mindestens zwei aneinander zu reihende und an ihrer jeweiligen Stirnseite miteinander zu verbindende Begrenzungssteine und mindestens ein Befestigungsmittel für diese,
**dadurch gekennzeichnet daß**
die Begrenzungssteine (1) an ihren Stirnseiten (7) jeweils eine im wesentlichen parallel zu ihrer Längsrichtung verlaufende Nut (8) zur Aufnahme von Stegen (3,4) des Befestigungsmittels (2) aufweisen, und am Befestigungsmittel (2) zwischen den Stegen (3,4) mindestens ein sich quer zu diesen erstreckendes Verankerungsteil (5) angeordnet ist.

2. **Bausatz nach Anspruch 1, dadurch gekennzeichnet, daß**
sich die Nut nur über einen Teilbereich der Höhe der Begrenzungssteine (1) erstreckt.

3. **Bausatz nach Anspruch 1, dadurch gekennzeichnet, daß**
sich die Nut (8) nur über einen Teilbereich der Länge des Begrenzungssteines (1) erstreckt und dieser im wesentlichen der Breite der Stege (3,4) entspricht.

4. **Bausatz nach Anspruch 1, dadurch gekennzeichnet, daß**
das Befestigungsmittel (2) einen im wesentlichen T- oder kreuzförmigen Querschnitt aufweist und das Verankerungsteil (5,6) im Bereich seines freien Endes keilförmig ausgebildet ist.

5. Bausatz nach Anspruch 1, **dadurch gekennzeichnet, daß**
die Dicke der Verankerungsteile (5,6) gleich der Dicke der Stege (3,4) ist.

6. Bausatz nach Anspruch 1, **dadurch gekennzeichnet, daß**
die Begrenzungssteine (1) im Bereich ihres die erste Nut (8) aufweisenden Endes einer Seitenfläche eine der ersten Nut (8) entsprechende zweite Nut (11) aufweisen, die zur ersten Nut (8) quer gerichtet ist.

7. Bausatz nach den Ansprüchen 1 und 6, **dadurch gekennzeichnet, daß**
die Begrenzungssteine (1) im Bereich der Mitte ihrer Seitenfläche eine der zweiten Nut (11) entsprechende dritte Nut (12) aufweisen, die zur zweiten Nut (11) parallel gerichtet ist.

8. **Bausatz nach Anspruch 1, dadurch gekennzeichnet, daß**
seitlich der ersten Nut (8) ein sich im wesentlichen über die gesamte Länge des Begrenzungssteines (1) erstreckender Kanal (9) zur Aufnahme einer Versorgungsleitung vorgesehen ist.
